# EUROPEAN PATENT SPECIFICATION

(11) **EP 3 173 252 B1**
(45) Date of publication and mention of the grant of the patent: **21.11.2018**
(21) Application number: 15823965.7
(22) Date of filing: 21.07.2015
(51) Int. Cl.: B60C 5/01, B60C 9/18, B60C 9/20, B60C 5/00, B60C 9/02

(54) **TIRE**
REIFEN
PNEU

(30) Priority: 23.07.2014 JP 2014150140
(43) Date of publication of application: 31.05.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/070743
(87) International publication number: WO 2016/013552

(56) References cited:
- EP-A1- 2 987 649
- EP-A1- 3 020 572
- WO-A1-2015/005172
- JP-A- 2010 058 717
- JP-A- 2011 207 165
- JP-A- 2011 207 165

## Description

### Technical Field

The present invention relates to a tire in which a tire frame member is formed of a resin material.

### Background Art

A tire in which a tire frame member is formed of a resin material, and a tread rubber layer is provided at an outer circumference of this tire frame member, has been proposed. In such tires, there are tires in which the tire frame member is formed by joining a pair of tire pieces together in a tire width direction (see, for example, Japanese Patent Application Laid-Open (JP-A) No. 03-143701).

In the tire disclosed in JP-A No. 03-143701, a reinforcement layer is formed by winding a reinforcement cord in a spiral configuration in a tire circumferential direction, and the tire rigidity is increased by embedding this reinforcement layer inside the tread rubber. Reference is also made to JP 2011-207165 A, EP 3020572 A1 and EP 2987649 A1, which disclose tires and methods of manufacturing tires. Both documents EP 3020572 A1 and EP 2987649 A1 are documents according to Article 54(3) EPC.

### SUMMARY OF THE INVENTION

### Technical Problem

However, in a case in which a large external force is applied to the tire such as a case in which the tire rides over a bump on a road surface, considerable stress acts on the join portion of the tire frame member, and deformation of the tire frame member increases.

In consideration of the above-described circumstances, exemplary embodiments of the present invention are intended to increase the rigidity of a join portion of a tire frame member that is formed by joining tire pieces together.

### Solution to Problem

A tire according to a first aspect includes: a toroidal tire frame member formed of resin, and is formed by joining plural tire pieces together in a tire width direction; a join portion reinforcement belt, provided at an inner side in a tire radial direction or at an outer side in the tire radial direction of a join portion between the tire pieces, that extends in a tire circumferential direction, and that is formed so as to include a cord that straddles the join portion; and a tread layer provided at the outer side in the tire radial direction of the tire frame member and the join portion reinforcement belt.

According to the tire according to the first aspect, a tire frame member, which is formed of resin, is formed by joining together a plurality of tire pieces in the tire width direction. Since a join portion reinforcement belt, that extends in the tire circumferential direction and is formed including a cord which extends across the join portion, is provided at an inner side in the tire radial direction or at an outer side in the tire radial direction of the tire frame member, the rigidity of the join portion may be increased.

In the tire according to the first aspect, the cord is folded back at end portions in the width direction of the join portion reinforcement belt, and end portions are disposed further to an inner side in the width direction than the end portions in the width direction of the join portion reinforcement belt.

According to the tire according to the first aspect, since the cord is folded back at end portions in the width direction of the join portion reinforcement belt, and end portions are disposed further to an inner side in the width direction than the end portions in the width direction of the join portion reinforcement belt, there are no cord end portions that may become a source of damage such as cracks and the like, at the end portions in the width direction of the join portion reinforcement belt, and thus, durability is improved.

A tire according to a second aspect, in the tire according to the first aspect, the cord of the join portion reinforcement belt is embedded in resin.

According to the tire according to the second aspect, since the cord of the join portion reinforcement belt is embedded in resin, the join portion reinforcement belt is strengthened by the integration of the cord and resin. As a consequence, rigidity of the join portion reinforcement belt is secured .

A tire according to a third aspect, in the tire according to the second aspect, the cord of the join portion reinforcement belt is sandwiched between resin sheets.

According to the tire according to the third aspect, by sandwiching the cord between resin sheets, the cord can be easily embedded in the resin.

A tire according to a fourth aspect, in the tire according to the second aspect or the third aspect, the join portion reinforcement belt is heat-welded to the tire frame member.

According to the tire according to the fourth aspect, since the resin of the join portion reinforcement belt and the resin of the tire frame member are heat-welded together, the adhesiveness between the join portion reinforcement belt and the tire frame member is improved.

A tire according to a fifth aspect, in the tire according to any one of the first aspect through fourth aspect, the join portion reinforcement belt is provided at the inner side in the tire radial direction of the tire frame member.

According to the tire according to the fifth aspect, in a case in which a tire rides over a bump on the road surface, compression stress acts on the outer side in the tire radial direction (i.e., on the road surface side) of the join portion, while tensile stress acts on the inner side in the tire radial direction (i.e., on the opposite side from the road surface) of the join portion. Since the cord of the join portion reinforcement belt straddles the join portion, the direction of the tensile stress can be made to coincide with the direction of the cord, so that the cord can be made to bear the tensile stress. Since the cord is resistant to tension, compared to a case in which the join portion reinforcement belt is provided at the outer side in the tire radial direction of the tire frame member, providing the join portion reinforcement belt on the inner side in the tire radial direction enables the rigidity of the tire frame member to be increased even further.

A tire according to a sixth aspect, in the tire according to any one of the first aspect through the fourth aspect, the join portion reinforcement belt is provided at the outer side in the tire radial direction of the tire frame member.

According to the tire according to the sixth aspect, since the join portion reinforcement belt is provided at the outer side in the tire radial direction of the tire frame member, the join portion of the tire frame member may be protected from the road surface side.

A tire according to a seventh aspect, in the tire according to any one of the first aspect through the third aspect, a belt layer is provided between the tire frame member and the tread layer; and the join portion reinforcement belt is provided at the outer side in the tire radial direction of the belt layer.

According to the tire according to the seventh aspect, since the join portion reinforcement belt is provided at the outer side in the tire radial direction of the belt layer, the belt layer, which is disposed on the outer side of the join portion of the tire frame member, may be protected from the road surface side by the join portion reinforcement belt.

A tire according to an eighth aspect, in the tire according to the seventh aspect, resin is adhered to the cord of the join portion reinforcement belt; the belt layer includes a tread portion reinforcement cord that is covered with resin; and the join portion reinforcement belt and the belt layer are heat-welded together.

According to the tire according to the eighth aspect, since the resin of the belt layer and the resin of the join portion reinforcement belt are heat-welded together, the adhesiveness between the belt layer and the join portion reinforcement belt is improved.

A tire according to a ninth aspect, in the tire according to any one of the first aspect through the eighth aspect, the join portion reinforcement belt includes auxiliary cords that are in contact with the cord, and that extends in a direction that intersect with the cord.

According to the tire according to the ninth aspect, since auxiliary cords, which intersects with the cord of the join portion reinforcement belt, contacts with the cord of the join portion reinforcement belt, the cord of the join portion reinforcement belt is held against the auxiliary cords by friction between the cords, and disturbance in spacing of the join portion reinforcement belt cord and the like is suppressed.

### Advantageous Effects of Invention

Since the tire according to the first aspect has the above-described structure, the rigidity of the join portion of the tire frame member may be increased.

In the tire according to the first aspect, since there are no severed ends in the cord that may become a source of damage such as cracks and the like, at the end portions in the width direction of the join portion reinforcement belt, the tensile force of the cord may be increased, and the water pressure resistance and the plunger performance may be improved.

In the tire according to the second aspect, the join portion reinforcement belt is strengthened by the integration of the cord and resin so that the durability of the join portion reinforcement belt is increased, and the water pressure resistance of the tire as well as the plunger performance are also improved.

Since the tire according to the third aspect has the above-described structure, the join portion reinforcement belt is strengthened by the integration of the cord and resin, the durability of the join portion reinforcement belt is increased, and the water pressure resistance and the plunger performance of the tire are also improved. Further, the join portion reinforcement belt with cords embedded in resin may be manufactured easily.

Since the tire according to the fourth aspect has the above-described structure, the adhesiveness between the tire frame member and the join portion reinforcement belt is improved, and the water pressure resistance of the tire as well as the plunger performance are also improved.

Since the tire according to the fifth aspect has the above-described structure, the rigidity of the tire frame member may be further increased.

Since the tire according to the sixth aspect has the above-described structure, the tire frame member may be protected from the road surface side.

Since the tire according to the seventh aspect has the above-described structure, the belt layer, which is disposed at the outer side in the tire radial direction of the join portion, may be protected from the road surface side.

Since the tire according to the eighth aspect has the above-described structure, the adhesiveness between belt layer and the join portion reinforcement belt is improved.

Since the tire according to the ninth aspect has the above-described structure, the water pressure resistance of the tire as well as the plunger performance are improved.

### BRIEF DESCRIPTION OF DRAWINGS

FIG. 1 is a perspective cross-sectional view illustrating a portion of a tire according to a first exemplary embodiment.
FIG. 2 is a cross-sectional view illustrating one side of a cross-section along a tire width direction of the tire according to the first exemplary embodiment.
FIG. 3 is a perspective view illustrating a reinforcement belt layer of which a portion is illustrated in cross-section.
FIG. 4 is a cross-sectional view illustrating one side of a cross-section along the tire width direction in a case in which the tire according to the first exemplary embodiment is riding over a bump on a road surface.
FIG. 5 is a cross-sectional view illustrating one side of a cross-section along the tire width direction of a tire according to a second exemplary embodiment.
FIG. 6 is a cross-sectional view illustrating one side of a cross-section along the tire width direction of a tire according to a third exemplary embodiment.
FIG. 7 is a perspective view illustrating a reinforcement belt layer according to a fourth exemplary embodiment, in which a portion is illustrated in cross-section.
FIG. 8 is a perspective view illustrating a reinforcement belt layer according to an embodiment not within the scope of the invention.

### DESCRIPTION OF EMBODIMENTS

### [First Exemplary Embodiment]

A tire 10 according to a first exemplary embodiment of the present invention will be described while referring to the drawings. Note that an arrow TW illustrated in the drawings indicates a direction parallel to the axis of rotation of the tire 10 (hereinafter, this is referred to where appropriate as a "tire width direction"), and an arrow TR indicates a radial direction which is orthogonal to the tire width direction and passes through the axis of rotation of the tire 10 (hereinafter, this is referred to where appropriate as a "tire radial direction"). Further, an arrow TC indicates a circumferential direction of a circle with the axis of rotation of the tire 10 in its center (hereinafter, this is referred to where appropriate as a "tire circumferential direction").

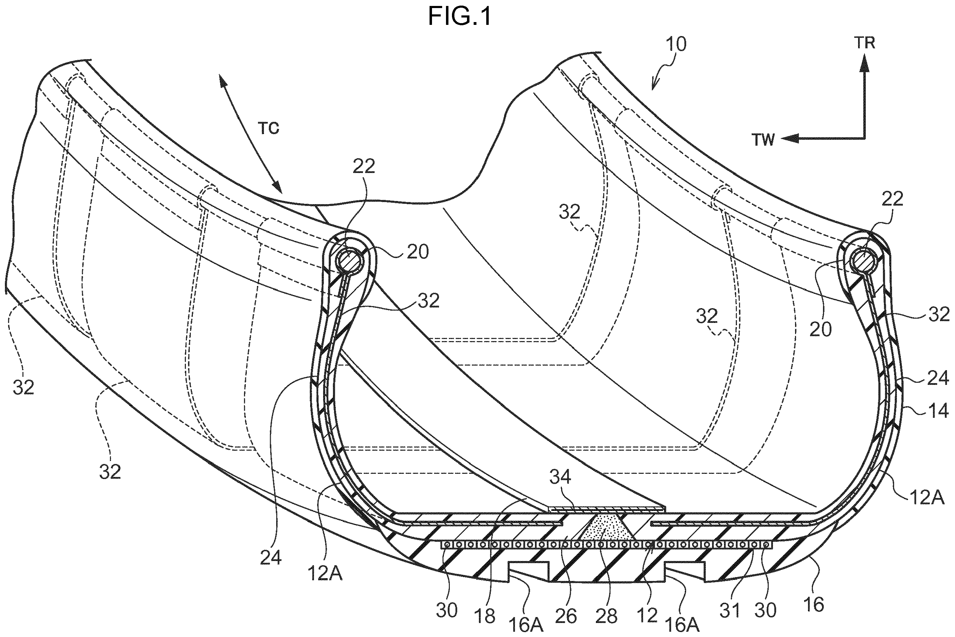

As illustrated in FIG. 1, the pneumatic tire 10 is formed using a resin material, and is formed so as to principally include a tire frame member 12, a covering rubber layer 14, tread rubber 16, and a reinforcement belt layer 18 that serves as a join portion reinforcement belt.

The tire frame member 12 is a resin component that is formed in a toroidal shape by joining a plurality of tire pieces 12A together in the tire width direction, and includes a pair of bead portions 20 which are disposed apart from each other in the tire width direction, a pair of side portions 24 that extend respectively from the pair of bead portions 20 towards outer sides in the tire radial direction, and a crown portion 26 that links together the pair of side portions 24. Note that, the bead portions 20 refer to portions extending from inner side ends in the tire radial direction as far as 30% of the tire cross-sectional height, while a portion where the tread rubber 16 is disposed is referred to as the crown portion 26.

Here, a thermoplastic resin, a thermoplastic elastomer (TPE), or a thermosetting resin or the like having an equivalent elasticity to rubber can be used as the resin material forming the tire frame member 12. However, considering the elasticity when traveling and the moldability during the production thereof, it is desirable that a thermoplastic elastomer be used. Note that, while it is possible for the entire tire frame member 12 to be formed of the aforementioned resin material, it is also possible for a portion of the tire frame member 12 to be formed of the aforementioned resin material.

Examples of a thermoplastic elastomer include amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), thermoplastic cross-linked rubber (TPV), and other thermoplastic elastomers (TPZ) as stipulated in JIS K 6418. Examples of a thermoplastic resin include urethane resins, olefin resins, vinyl chloride resins, and polyamide resins and the like.

Furthermore, as these thermoplastic resin materials it is possible to use a thermoplastic resin material having, for example, a deflection temperature under load (at a load of 0.45 MPa) as stipulated in ISO75-2 or ASTM D648 of not less than 78°C, a tensile yield strength as stipulated in JIS K 7113 of not less than 10 MPa, a tensile elongation at yield point as also stipulated in the same JIS K 7113 of not less than 10%, a tensile elongation break as also stipulated in the same JIS K 7113 of not less than 50%, and a Vicat softening temperature (method A) as stipulated in JIS K 7206 of not less than 130°C.

A bead core 22 is embedded in the bead portion 20 of the tire frame member 12. As the material forming this bead core 22, metal, organic fibers, a material formed by covering organic fibers with resin, or a hard resin or the like, can be used. Note that, the bead core 22 may be omitted in a case in which sufficient rigidity is secured in the bead portion 20 and there is no problem in fitting with a rim (not illustrated in the drawings).

Here, a plurality of side reinforcement components 32 are embedded in the tire frame member 12 extending from the bead portion 20 to the side portion 24. The side reinforcement components 32 are belt-shaped components that are formed by laminating twisted cords, monofilaments, or an aggregate of a plurality of filaments using resin. One end portion of the side reinforcement components 32 is wound around the bead core 22 and folded back, while another end portion of the side reinforcement components 32 extends from the side portion 24 to the crown portion 26 so as to be positioned in a central portion in the tire width direction of the tire frame member 12.

A plurality of the side reinforcement components 32 are disposed with intervals in the tire circumferential direction, and in the present exemplary embodiment, twenty four side reinforcement components 32 are disposed with equal intervals around the periphery of the tire 10. Note that, in the present exemplary embodiment, the side reinforcement components 32 are formed in a rectangular shape, however, the present invention is not limited to this and the side reinforcement components 32 may be formed in another shape, for example, in a fan shape. Further, the side reinforcement components 32 may be disposed without any space between mutually adjacent side reinforcement components 32 such that a portion of the side reinforcement components 32 overlap each other.

A joining component 28 made of resin is provided in the crown portion 26 of the tire frame member 12 between the pair of tire pieces 12A. The joining component 28 is formed substantially in a trapezoidal shape when seen in a cross-sectional view, and the tire pieces 12A are joined to both side surfaces in the tire width direction of this joining component 28 such that the pair of tire pieces 12A are linked together. Note that either the same type or a different type of thermoplastic material or molten resin as the tire pieces 12A can be used for the joining component 28. Further, the tire pieces 12A may be joined together without using the joining component 28. In such case, for example, a hot plate welding method in which a hot plate is interposed between end portions of the tire pieces 12A, and the hot plate is then removed while the end portions are being pressed in a direction in which they approach each other so that the end portions become welded together, or a method in which the tire pieces 12A are adhered together using an adhesive agent can be used. Furthermore, both of these methods may be used in combination.

A belt layer 31, formed by winding a reinforcement cord 30 in, for example, a spiral configuration, is provided in the crown portion 26 of the tire frame member 12. As the cord 30, a steel cord, a monofilament made from metal fibers or organic fibers or the like, or a multifilament formed by twisting these fibers can be used. Here, in a case in which a steel cord is used for the cord 30, the steel cord is coated in advance with resin, and while the cord 30 is being heated, the cord 30 is wound in a spiral in the tire circumferential direction. At this time, both the cord 30 and the steel cord may be heated.

By winding the reinforcement cord 30 in the tire circumferential direction in a spiral configuration, the rigidity in the tire circumferential direction of the crown portion 26 may be improved, and the fracture resistance of the crown portion 26 may also be improved. Further, the puncture resistance of the crown portion 26 of the tire 10 may also be increased. Note that, winding the cord 30 in a spiral configuration in the tire circumferential direction in order to reinforce the crown portion 26 is preferable, since production is easier, however, it is also possible for the cord 30 to be wound non-continuously in the tire width direction. Further, it is also possible to reinforce the tire frame member 12 by embedding other reinforcement materials (high polymer materials, metal fibers, cords, non-woven fabrics and woven fabrics) in the tire frame member 12.

At an outer surface of the tire frame member 12 formed in the manner described above, the covering rubber layer 14 is provided. The covering rubber layer 14 is formed having a continuous uniform thickness, and the same type of rubber as the rubber used in the sidewalls and in the bead portions of conventional, typical rubber pneumatic tires is used. The covering rubber layer 14 covers tire side surfaces of the tire frame member 12, and is folded around the bead portions 20 so as to extend to the inner side of the bead portions 20.

The tread rubber 16 serving as the tread layer is vulcanized and adhered to the tire frame member 12. The tread rubber 16 is positioned on the outer side in the tire radial direction of the crown portion 26 of the tire frame member 12, and the same type of rubber as the tread rubber of conventional, typical rubber pneumatic tires, and as the tread rubber of retreaded tires is used. Grooves 16A for draining water are formed extending in the tire circumferential direction in the tread surface of the tread rubber 16. In the present exemplary embodiment, two grooves 16A are formed, however, the present invention is not limited to this, and a greater number of groves 16A may be formed, or may be slanted diagonally relative to the tire circumferential direction. In addition, a known tread pattern may be used.

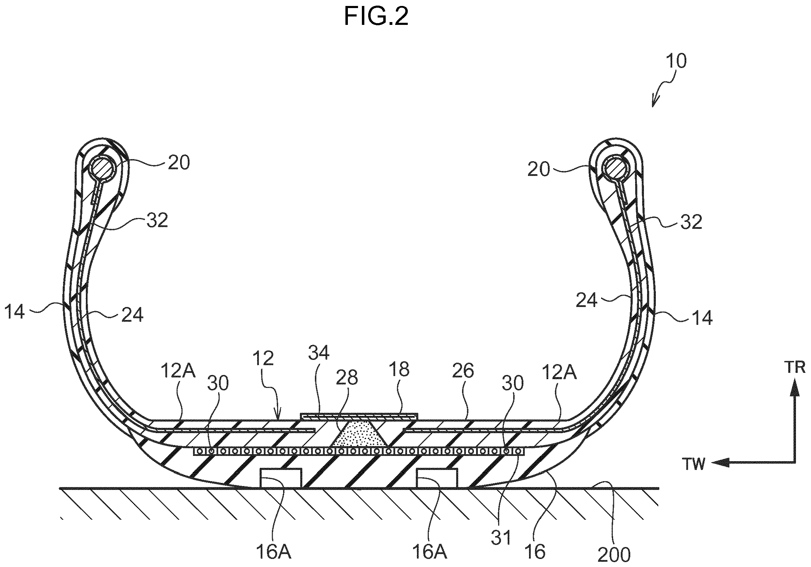

The reinforcement belt layer 18 is adhered to a surface of the crown portion 26 of the tire frame member 12 on the opposite side from the tread rubber 16 (i.e., is adhered to the inner circumferential surface). As illustrated in FIG. 1 and FIG. 2, the reinforcement belt layer 18 covers the join portion of the tire frame member 12 where the joining component 28 is provided from the inner circumferential side. The reinforcement belt layer 18 is an elongated belt-shaped layer that is formed extending all the way around the inner circumferential surface of the tire frame member 12, and is located in a central portion in the tire width direction.

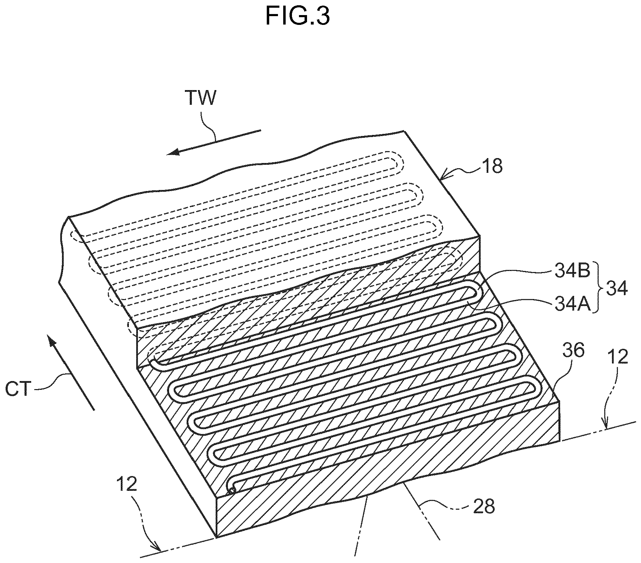

As illustrated in FIG. 3, the reinforcement belt layer 18 of the present exemplary embodiment is formed by covering a cord 34 with resin 36. In the present exemplary embodiment, a single cord 34 tortuously extends in the tire circumferential direction (i.e., in the direction illustrated by an arrow CT), and the cord 34 includes rectilinear portions 34A, and linking portions 34B that are formed as circular arc-shaped return portions that link together end portions of mutually adjacent rectilinear portions 34A. In the present exemplary embodiment, the rectilinear portions 34A extend in the tire width direction (i.e., in the direction illustrated by the arrow TW), and straddle the join portion of the tire frame member 12 at a right angle thereto. Further, the rectilinear portions 34A are disposed with fixed intervals in the tire circumferential direction. Note that end portions (not illustrated in the drawings) of the cord 34 are not exposed at the end portions in the width direction of the reinforcement belt layer 18, but are disposed in an intermediate portion in the width direction of the reinforcement belt layer 18. Further, an angle of the rectilinear portions 34A relative to the tire width direction (i.e. to the direction illustrated by the arrow TW) is preferably not more than 10°, and more preferably not more than 5°, and most preferably not more than 0°.

As a method to manufacture the reinforcement belt layer 18, for example, a method in which the tortuous cord 34 is interposed between two resin sheets and are then heat-welded, or a method in which, at the same time as molten resin is poured between a pair of rollers positioned apart from each other, the cord 34 is fed with a reciprocating motion in the axial direction of the rollers.

In a case in which the cord 34 is formed by covering with the resin 36, in order to adhere the reinforcement belt layer 18 and the tire frame member 12, a welding method using a thermoplastic resin or molten resin, or a method in which they are adhered together using an adhesive agent is used. Either the same type of thermoplastic material or molten resin, or else a different type of thermoplastic material or molten resin as that used for the tire pieces 12A can be used for the resin 36 covering the cord 34. However, it is preferable that the same type of thermoplastic material or molten resin be used. In the present exemplary embodiment, the reinforcement belt layer 18 and the tire frame member 12 are heat-welded together.

The cord 34 of the reinforcement belt layer 18 may be formed by a monofilament or by an aggregate of a plurality of filaments, or may be formed by a twisted cord. Further, a plurality of cords 34 may be arranged in rows, or may be woven into a fabric configuration. The material used to form the cord 34 may be formed of organic fibers (nylon, PET, aramid, or the like), inorganic fibers (glass or the like), or a metal such as steel. In a case in which the reinforcement belt layer 18 is formed by covering the cord 34 with resin, it is possible to cover either one side or both sides of the cord 34 with the resin.

Note that the cord 34 is not restricted to being covered with resin, and may be covered with rubber. In a case in which the cord 34 is covered with rubber, in order to adhere the reinforcement belt layer 18 and the tire frame member 12, a method such as a bladder vulcanization method in which vulcanization is performed via a bladder, or a bladderless vulcanization method in which vulcanization is performed without a bladder, or a core vulcanization method utilizing a rigid core, may be employed.

The reinforcement belt layer 18 of the present exemplary embodiment is formed having a length (i.e., a width) in the tire width direction of 35 mm, however, the present invention is not limited to this, and this dimension may be suitably altered in accordance with the size and shape of the tire 10. Further, from the standpoint of ensuring sufficient rigidity, it is preferable that the reinforcement belt layer 18 be formed having a width of 30 mm or more.

As illustrated in FIG. 2, in a case in which the reinforcement belt layer 18 is projected in the tire radial direction, both end portions in the width direction of the reinforcement belt layer 18 overlap in the tire radial direction with end portions of the side reinforcement components 32 that are embedded in the tire frame member 12. In this way, as a result of the reinforcement belt layer 18 and the side reinforcement components 32 overlapping in the tire radial direction, any portions having low rigidity can be eliminated. However, the present invention is not limited to this, and the reinforcement belt layer 18 and the side reinforcement components 32 may be arranged such that they do not overlap each other in the tire radial direction.

Further, in the present exemplary embodiment, rigidity is increased by extending the side reinforcement components 32 to the central portion in the tire width direction of the tire frame member 12, however, the present invention is not limited to this, and the side reinforcement components 32 may not extend to the crown portion 26 as long as they are provided in the side portions 24.

### [Actions and Effects]

Next, actions and effects of the tire 10 according to the present exemplary embodiment will be described. In the tire 10 according to the present exemplary embodiment, since the side reinforcement components 32 are embedded in the side portions 24 of the tire frame member 12, which is formed of a resin material, the rigidity of the side portions 24 may be increased. As a consequence, what is known as 'pinch cutting', which is when the side portions 24 become deformed so that the side portions 24 become nipped between a bump on a road surface 200 and the rim, may be suppressed.

Further, since the side reinforcement components 32 extend to the crown portion 26, and the reinforcement cord 30 is embedded in this crown portion 26, the rigidity of the crown portion 26 may be increased. Furthermore, since the tire frame member 12 of the present exemplary embodiment is formed by joining together the pair of tire pieces 12A via the joining component 28 which is made from resin, compared to a case in which these are adhered together using an adhesive agent or the like, the join strength may be increased. Further, the reinforcement belt layer 18 is heat-welded to the crown portion 26 of the tire frame member 12 so as to cover the joining component 28. As a consequence, the join portion that more easily deforms than other portions, may be reinforced.

This point will be described using the drawings. As illustrated in FIG. 2, in a case in which the tire 10 is grounded on the road surface 200, since the weight of the vehicle acts on the tire 10, the crown portion 26 and the tread rubber 16 of the tire frame member 12 are pressed against the road surface.

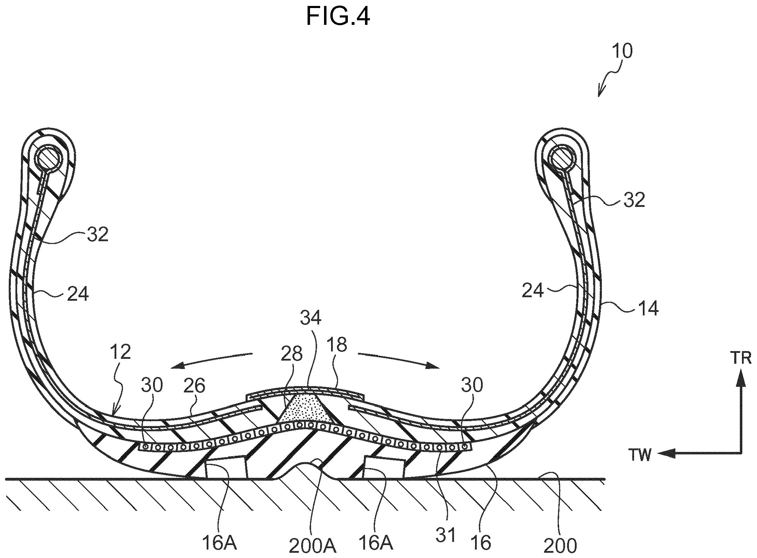

Next, as illustrated in FIG. 4, in a case in which the tire 10 rides over a bump 200A on the road surface 200, the tread rubber 16 is pressed against the bump 200A, and stress is applied in the tire radial direction to the crown portion 26 of the tire frame member 12. Note that, in FIG. 4, in order to facilitate the description, the deformation is illustrated in an exaggerated state.

In a case in which this stress in the tire radial direction acts on the crown portion 26, tensile stress (illustrated by the arrows in FIG. 4) is generated in the surface on the inner side in the tire radial direction of the tire frame member 12. Here, since the reinforcement belt layer 18 including the cord 34 which straddles the join portion is heat-welded to the join portion of the tire frame member 12, the join portion is reinforced and the rigidity is increased. Consequently, even in a case in which tensile stress is applied, deformation by the tire frame member 12 may be suppressed. Further, in the present exemplary embodiment, since both end portions in the width direction of the reinforcement belt layer 18 overlap in the tire radial direction with the side reinforcement components 32, the entire crown portion 26 is reinforced, and deformation may be suppressed.

Note that, in the present exemplary embodiment, the tire frame member 12 is formed by joining the pair of tire pieces 12A together, however, the present invention is not limited to this, and the tire frame member 12 may be formed by joining three or more tire pieces 12A together. In such case, reinforcement belt layers 18 may be provided respectively in each join portion between adjacent tire pieces 12A.

In the reinforcement belt layer 18 of the present invention, since the cord 34 is folded back at both end portions in the width direction, and the end portions of the cord 34, which might otherwise become a source of malfunctions such as cracks and the like, are not exposed at the end portions in the width direction of the reinforcement belt layer 18, malfunctions generated by end portions in the width direction of the reinforcement belt layer 18 are suppressed.

### [Second embodiment]

Next, a tire 10 according to a second exemplary embodiment of the present invention will be described. Note that component elements that are the same as in the first exemplary embodiment are given the same descriptive symbols and description thereof is omitted.

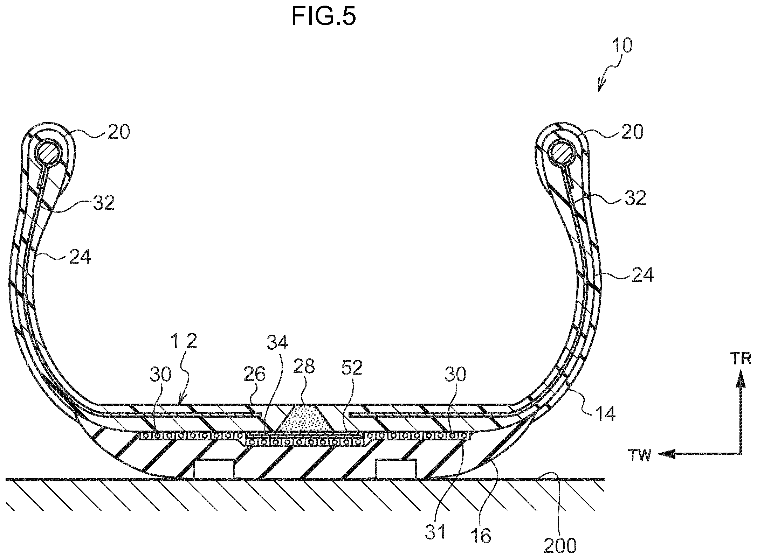

As illustrated in FIG. 5, a reinforcement belt layer 52 having an identical structure to that of the reinforcement belt layer 18 of the first exemplary embodiment is heat-welded to a surface on the outer side in the tire radial direction of the tire frame member 12. Here, both end portions in the width direction of the reinforcement belt layer 52 overlap in the tire radial direction with the side reinforcement components 32. In addition, the belt layer 31 and the tread rubber 16 are provided at the outer side in the tire radial direction of the reinforcement belt layer 52.

According to the tire 10 of the present exemplary embodiment, since the reinforcement belt layer 52 is sandwiched between the tire frame member 12 and the belt layer 31, and is heat-welded to the tire frame member 12 and the belt layer 31, the reinforcement belt layer 52 has excellent adhesiveness with the tire frame member 12 and the belt layer 31, and it is difficult for the reinforcement belt layer 52 to peel away from the tire frame member 12 and the belt layer 31. Further, the reinforcement belt layer 52 may protect the join portion of the tire frame member 21 from the road surface side. The remaining effects are the same as in the first exemplary embodiment.

### [Third exemplary embodiment]

Next, a tire 10 according to a third exemplary embodiment of the present invention will be described. Note that component elements that are the same as in the above-described exemplary embodiments are given the same descriptive symbols and description thereof is omitted.

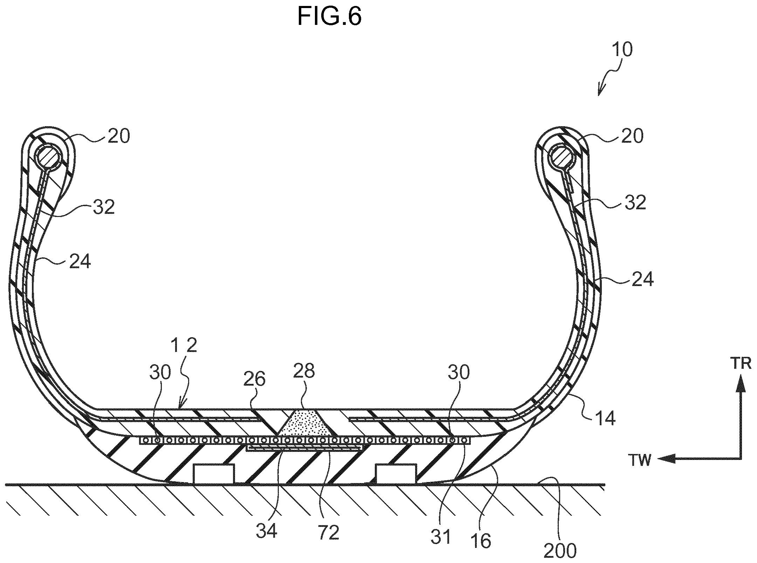

As illustrated in FIG. 6, in the tire 10 of the present exemplary embodiment, a reinforcement belt layer 72 having a same structure to that of the reinforcement belt layer 18 of the first exemplary embodiment is heat-welded to a surface on the outer side in the tire radial direction of the belt layer 31.

According to the tire 10 of the present exemplary embodiment, since the reinforcement belt layer 72 and the belt layer 31 are heat-welded together, the adhesiveness between the reinforcement belt layer 72 and the belt layer 31 is improved. Further, the reinforcement belt layer 72 may protect the belt layer 31, which is disposed on the outer side in the tire radial direction of the join portion of the tire frame member 12, from the road surface side. The remaining effects are the same as in the first exemplary embodiment.

### [Fourth exemplary embodiment]

Next, a fourth exemplary embodiment of the present invention will be described. Note that component elements that are the same as in the above-described exemplary embodiments are given the same descriptive symbols and description thereof is omitted.

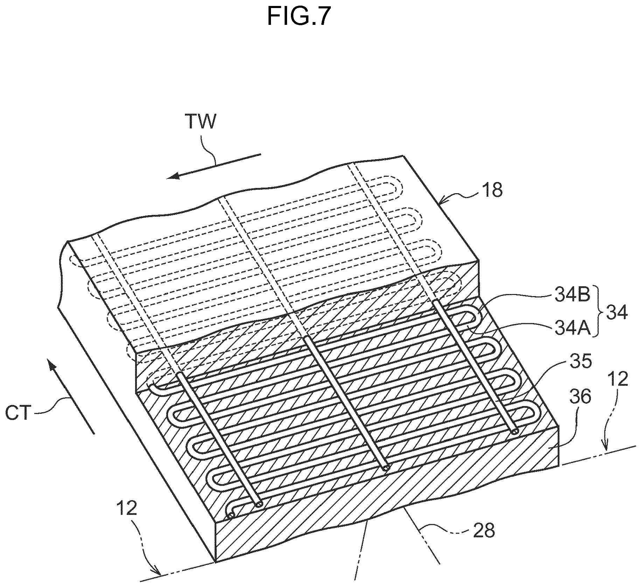

As illustrated in FIG. 7, in the reinforcement belt layer 18 of the present exemplary embodiment, a plurality of auxiliary cords 35 that extend in the tire circumferential direction so as to intersect to the rectilinear portions 34A are disposed apart from each other in the width direction of the reinforcement belt layer 18 such that they are in contact with the cord 34 that tortuously extends in the tire circumferential direction (i.e., in the direction illustrated by an arrow CT). Note that three auxiliary cords 35 are provided in the present exemplary embodiment, however, the present invention is not limited to this, and more than three auxiliary cords 35 may be provided.

By providing the auxiliary cords 35 that extend in the tire circumferential direction in the reinforcement belt layer 18, the flexural rigidity of the reinforcement belt layer 18 in the circumferential direction may be increased. Further, during the manufacturing of the reinforcement belt layer 18, by placing the auxiliary cords 35 in contact with the cords 34 that tortuously extend, the friction force between the cords may suppress disturbance in spacing between the rectilinear portions 34A of the cords 34, during the resin coating process. By maintaining a uniform spacing between the rectilinear portions 34A of the cords 34, the reinforcement effect provided by the reinforcement belt layer 18 may be applied uniformly in the tire circumferential direction. As a result, the water pressure resistance and the plunger performance of the tire 10 may be improved.

### [Fifth exemplary embodiment]

Next, a fifth exemplary embodiment not forming part of the present invention will be described. Note that component elements that are the same as in the above-described exemplary embodiments are given the same descriptive symbols and description thereof is omitted.

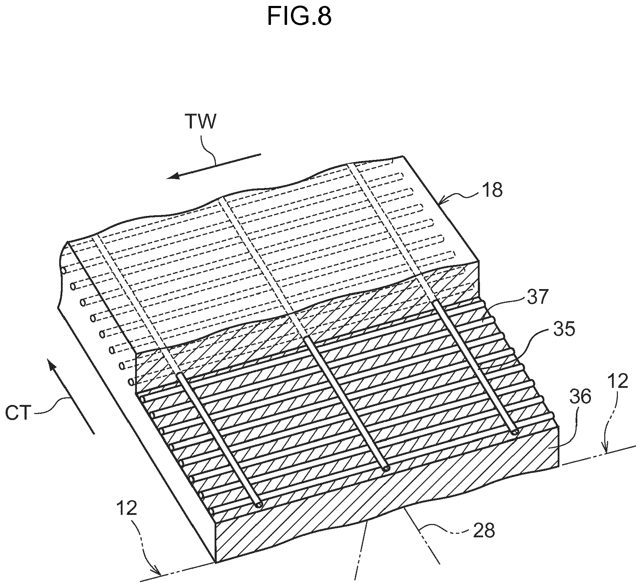

As illustrated in FIG. 8, in the reinforcement belt layer 18 of the present exemplary embodiment, instead of the cord 34 that tortuously extends in the tire circumferential direction (i.e., in the direction illustrated by an arrow CT), a plurality of cords 37 that extend in the tire width direction are disposed with uniform intervals in the tire circumferential direction, and the auxiliary cords 35 are placed in contact with the cords 37. In the present exemplary embodiment as well, since the plurality of cords 37 straddle the join portion, the rigidity of the join portion may be increased.

### [Other embodiments]

In the above, First through fourth exemplary embodiments of the present invention have been described. However, it is to be understood that the present invention is not limited to these exemplary embodiments and may be realized in a variety of aspects insofar as these do not depart from the scope of the present invention according to the appended claims. For example, the reinforcement belt layer 18 may be adhered to both surfaces in the tire radial direction of the tire frame member 12 by combining the first exemplary embodiment and the second exemplary embodiment.

## Claims

1. A tire (10) comprising:
a toroidal tire frame member (12) formed of resin, and is formed by joining a plurality of tire pieces (12A) together in a tire width direction;
a join portion reinforcement belt (18, 52, 72), provided at an inner side in a tire radial direction or at an outer side in the tire radial direction of a join portion between the tire pieces (12A), that extends in a tire circumferential direction, and that is formed so as to include a cord (34) that straddles the join portion; and
a tread layer provided at the outer side in the tire radial direction of the tire frame member (12) and the join portion reinforcement belt (18, 52, 72), **characterized in that**
the cord (34) is folded back at end portions in the width direction of the join portion reinforcement belt (18, 52, 72), and end portions are disposed further to an inner side in the width direction than the end portions in the width direction of the join portion reinforcement belt (18, 52, 72).

2. The tire (10) according to claim 1, wherein the cord (34) of the join portion reinforcement belt (18, 52, 72) is embedded in resin.

3. The tire (10) according to claim 2, wherein the cord (34) of the join portion reinforcement belt (18, 52, 72) is sandwiched between resin sheets.

4. The tire (10) according to claim 2 or claim 3, wherein the join portion reinforcement belt (18, 52, 72) is heat-welded to the tire frame member (12).

5. The tire (10) according to any one of claims 1 through 4, wherein the join portion reinforcement belt (18, 52, 72) is provided at the inner side in the tire radial direction of the tire frame member (12).

6. The tire (10) according to any one of claims 1 through 4, wherein the join portion reinforcement belt (18, 52, 72) is provided at the outer side in the tire radial direction of the tire frame member (12).

7. The tire (10) according to any one of claims 1 through 3, wherein:
a belt layer (31) is provided between the tire frame member (12) and the tread layer; and
the join portion reinforcement belt (18, 52, 72) is provided at the outer side in the tire radial direction of the belt layer (31).

8. The tire (10) according to claim 7, wherein:
resin is adhered to the cord (34) of the join portion reinforcement belt (18, 52, 72);
the belt layer (31) includes a tread portion reinforcement cord (30) that is covered with resin (36); and
the join portion reinforcement belt (18, 52, 72) and the belt layer (31) are heat-welded together.

9. The tire (10) according to any one of claims 1 through 8, wherein the join portion reinforcement belt (18, 52, 72) includes auxiliary cords (35) that are in contact with the cord (37), and that extends in a direction that intersect with the cord (37).

## Patentansprüche

1. Reifen (10), der Folgendes umfasst:
ein kreisringförmiges Reifengerüstelement (12), das aus Harz geformt ist und durch Verbinden einer Vielzahl von Reifenteilen (12A) miteinander in einer Reifenbreitenrichtung geformt ist,
einen Verbindungsabschnitt-Verstärkungsgürtel (18, 52, 72), der an einer in einer Reifenradialrichtung inneren Seite oder einer in der Reifenradialrichtung äußeren Seite eines Verbindungsabschnitts zwischen den Reifenteilen (12A) bereitgestellt wird, der sich in einer Reifenumfangsrichtung erstreckt und der so geformt ist, dass er einen Kord (34) einschließt, der den Verbindungsabschnitt überspannt, und
eine Laufflächenschicht, die an der in der Reifenradialrichtung äußeren Seite des Reifengerüstelements (12) und des Verbindungsabschnitt-Verstärkungsgürtels (18, 52, 72) bereitgestellt wird, **dadurch gekennzeichnet, dass**
der Kord (34) an Endabschnitten des Verbindungsabschnitt-Verstärkungsgürtels (18, 52, 72) in der Breitenrichtung zurückgeschlagen ist und Endabschnitte weiter zu einer in der Breitenrichtung inneren Seite angeordnet sind als die Endabschnitte des Verbindungsabschnitt-Verstärkungsgürtels (18, 52, 72) in der Breitenrichtung.

2. Reifen (10) nach Anspruch 1, wobei der Kord (34) des Verbindungsabschnitt-Verstärkungsgürtels (18, 52, 72) in Harz eingebettet ist.

3. Reifen (10) nach Anspruch 2, wobei der Kord (34) des Verbindungsabschnitt-Verstärkungsgürtels (18, 52, 72) zwischen Harzbahnen eingelegt ist.

4. Reifen (10) nach Anspruch 2 oder Anspruch 3, wobei der Verbindungsabschnitt-Verstärkungsgürtel (18, 52, 72) an das Reifengerüstelement (12) heißgeschweißt ist.

5. Reifen (10) nach einem der Ansprüche 1 bis 4, wobei der Verbindungsabschnitt-Verstärkungsgürtel (18, 52, 72), an der in der Reifenradialrichtung inneren Seite des Reifengerüstelements (12) bereitgestellt wird.

6. Reifen (10) nach einem der Ansprüche 1 bis 4, wobei der Verbindungsabschnitt-Verstärkungsgürtel (18, 52, 72), an der in der Reifenradialrichtung äußeren Seite des Reifengerüstelements (12) bereitgestellt wird.

7. Reifen (10) nach einem der Ansprüche 1 bis 3, wobei:
eine Gürtellage (31) zwischen dem Reifengerüstelement (12) und der Laufflächenschicht bereitgestellt wird, und
der Verbindungsabschnitt-Verstärkungsgürtel (18, 52, 72) an der in der Reifenradialrichtung äußeren Seite der Gürtellage (31) bereitgestellt wird.

8. Reifen (10) nach Anspruch 7, wobei:
Harz an den Kord (34) des Verbindungsabschnitt-Verstärkungsgürtels (18, 52, 72) geklebt ist,
die Gürtellage (31) einen Laufflächenabschnitt-Verstärkungskord (30) einschließt, der mit Harz (36) überzogen ist, und
der Verbindungsabschnitt-Verstärkungsgürtel (18, 52, 72) und die Gürtellage (31) aneinander heißgeschweißt sind.

9. Reifen (10) nach einem der Ansprüche 1 bis 8, wobei der Verbindungsabschnitt-Verstärkungsgürtel (18, 52, 72) Nebenkords (35) einschließt, die in Berührung mit dem Kord (37) stehen und die sich in einer Richtung erstrecken, die sich mit dem Kord (37) überschneidet.

## Revendications

1. Bandage pneumatique (10), comprenant :
un élément de cadre toroïdal du bandage pneumatique (12) composé de résine et formé en reliant plusieurs pièces du bandage pneumatique (12A) dans une direction de la largeur du bandage pneumatique ;
une ceinture de renforcement de la partie de liaison (18, 52, 72) agencée au niveau d'un côté interne, dans une direction radiale du bandage pneumatique, ou au niveau d'un côté externe, dans la direction radiale du bandage pneumatique, d'une partie de liaison entre les pièces du bandage pneumatique (12A), s'étendant dans une direction circonférentielle du bandage pneumatique et formée de sorte à inclure un câblé (34) chevauchant la partie de liaison ; et
une couche de bande de roulement agencée au niveau du côté externe, dans la direction de la largeur du bandage pneumatique, de l'élément de cadre du bandage pneumatique (12) et de la ceinture de renforcement de la partie de liaison (18, 52, 72), **caractérisé en ce que** :
le câblé (34) est replié vers l'arrière au niveau de parties d'extrémité, dans la direction de la largeur, de la ceinture de renforcement de la partie de liaison (18, 52, 72), les parties d'extrémité étant disposées davantage vers un côté interne, dans la direction de la largeur, que les parties d'extrémité dans la direction de la largeur de la ceinture de renforcement de la partie de liaison (18, 52, 72).

2. Bandage pneumatique (10) selon la revendication 1, dans lequel le câblé (34) de la ceinture de renforcement de la partie de liaison (18, 52, 72) est noyé dans de la résine.

3. Bandage pneumatique (10) selon la revendication 2, dans lequel le câblé (34) de la ceinture de renforcement de la partie de liaison (18, 52, 72) est pris en sandwich entre des feuilles de résine.

4. Bandage pneumatique (10) selon les revendications 2 ou 3, dans lequel la ceinture de renforcement de la partie de liaison (18, 52, 72) est fixée par thermo-soudage sur l'élément de cadre du bandage pneumatique (12).

5. Bandage pneumatique (10) selon l'une quelconque des revendications 1 à 4, dans lequel la ceinture de renforcement de la partie de liaison (18, 52, 72) est agencée au niveau du côté interne, dans la direction radiale du bandage pneumatique, de l'élément de cadre du bandage pneumatique (12).

6. Bandage pneumatique (10) selon l'une quelconque des revendications 1 à 4, dans lequel la ceinture de renforcement de la partie de liaison (18, 52, 72) est agencée au niveau du côté externe, dans la direction radiale du bandage pneumatique, de l'élément de cadre du bandage pneumatique (12).

7. Bandage pneumatique (10) selon l'une quelconque des revendications 1 à 3, dans lequel :
une couche de ceinture (31) est agencée entre l'élément de cadre du bandage pneumatique (12) et la couche de bande de roulement ; et
la ceinture de renforcement de la partie de liaison (18, 52, 72) est agencée au niveau du côté externe, dans la direction radiale du bandage pneumatique, de la couche de ceinture (31).

8. Bandage pneumatique (10) selon la revendication 7, dans lequel :
de la résine est adhérée au câblé (34) de la ceinture de renforcement de la partie de liaison (18, 52, 72) ;
la couche de ceinture (31) inclut un câblé de renforcement de la partie de bande de roulement (30) recouvert de résine (36) ; et
la ceinture de renforcement de la partie de liaison (18, 52, 72) et la couche de ceinture (31) sont assemblées par thermo-soudage.

9. Bandage pneumatique (10) selon l'une quelconque des revendications 1 à 8, dans lequel la ceinture de renforcement de la partie de liaison (18, 52, 72) inclut des câblés auxiliaires (35) en contact avec le câblé (37) et s'étendant dans une direction coupant le câblé (37).
